(19) Europäisches Patentamt
European Patent Office
Office européen des brevets

(11) EP 1 640 418 B1

# (12) EUROPÄISCHE PATENTSCHRIFT

(45) Veröffentlichungstag und Bekanntmachung des Hinweises auf die Patenterteilung:
**06.06.2007 Patentblatt 2007/23**

(51) Int Cl.:
***C08L 101/00*** *(2006.01)* ***C08G 77/46*** *(2006.01)*

(21) Anmeldenummer: **04021972.7**

(22) Anmeldetag: **16.09.2004**

(54) **Verwendung organomodifizierter Siloxane zur Behandlung von Oberflächen thermoplastischer Elastomere**

Use of organo-modified siloxanes for improving the surface-properties of thermoplastic elastomers.

Utilisation d'un polysiloxane modifié pour le traitement de surfaces d'élastomères thermoplastiques.

(84) Benannte Vertragsstaaten:
**AT BE BG CH CY CZ DE DK EE ES FI FR GB GR HU IE IT LI LU MC NL PL PT RO SE SI SK TR**

(43) Veröffentlichungstag der Anmeldung:
**29.03.2006 Patentblatt 2006/13**

(73) Patentinhaber: **Goldschmidt GmbH
45127 Essen (DE)**

(72) Erfinder:
- **Oestreich, Sascha, Dr.
45279 Essen (DE)**
- **Scheiba, Manfred
45138 Essen (DE)**
- **Stadtmüller, Stefan, Dr.
45309 Essen (DE)**
- **Weimann, Markus
46240 Bottrop (DE)**

(56) Entgegenhaltungen:
**EP-A- 1 382 633** **EP-B- 1 403 349**
**US-A- 3 541 031**

- **PATENT ABSTRACTS OF JAPAN Bd. 018, Nr. 604 (C-1275), 17. November 1994 (1994-11-17) & JP 06 228441 A (SHIN ETSU CHEM CO LTD), 16. August 1994 (1994-08-16)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 640 418 B1

Printed by Jouve, 75001 PARIS (FR)

## Beschreibung

Die Erfindung betrifft die Verwendung organomodifizierter Siloxane als Additive die bei der Einarbeitung in thermoplastische Elastomere zu einer permanenten Verbesserung der Oberflächeneigenschaften führen, ohne dass durch Ausblühvorgänge negative Folgen bei nachgeschalteten Arbeitsschritten zu erwarten sind.

Thermoplastische Elastomere werden in der Technik, Industrie, Haushalt heutzutage weltweit in allen Anwendungsbereichen als Lacke, Oberflächenbeschichtungen, Verpackungsmaterialien und Formteilen für Gebrauchsgegenstände, Geräte und Maschinen verwendet.

Eine wichtige Voraussetzung für die Gebrauchsfähigkeit von diesen Elastomeren bei der privaten und gewerblichen Anwendung ist, dass die Oberflächeneigenschaften den technischen und mechanischen Anforderungen der jeweiligen Anwendung genügen. Insbesondere sind dies Oberflächenkratzfestigkeit, Abriebresistenz, Gleitfähigkeit.

Zur Erzielung dieser Effekte wurden in der Vergangenheit bereits eine Reihe von Additiven zur Einarbeitung in die Polymeren vorgeschlagen. So wurde zur Verbesserung der Gleiteigenschaften von Polyethylen die Einarbeitung von migrierenden Additiven wie Fettsäureamiden oder nicht migrierenden Additiven wie Siliconölen vorgeschlagen.

Additive auf Siliconölbasis als Polymermasterbatche sind vielfach beschrieben und z.B. unter der Bezeichnung MB 50 von Dow Corning erhältlich. Es handelt sich bei dieser Siliconkomponente um ultrahochmolekulare nicht funktionelle Siliconöle mit Molekulargewichten von 40.000 bis 400.000 die in einem Polymerträger verarbeitet sind. In empfohlenen Einsatzkonzentrationen von bis zu 2 % verbessern diese Additive als inneres und äußeres Gleitmittel die Prozesseigenschaften des Polymers bei der Verarbeitung. Die Rückhaltung des Siloxanes im Polymer ist durch das hohe Molekulargewicht und die damit verbundene gehemmte Mobilität bedingt.

In der WO-A-93/03095 werden Polypropylen-Copolymere und daraus hergestellte Formkörper mit verbesserter Kratzfestigkeit beschrieben, die als Additive Polyorganosiloxane, insbesondere Polydimethylsiloxane, enthalten.

Die EP-B-0 682 679 beschreibt ein Verfahren zum kratzfest machen von Polymerharzblends auf Basis von Polypropylen/Polyethylen, enthaltend Talk und ein Epoxidharz.

In der EP-B-0 868 460 sind klare kratzfeste Beschichtungszusammensetzungen (top coats) beschrieben, die im wesentlichen Acrylosilanpolymere zur Kratzfestmachung enthalten.

In der JP-A-06228441 wird zur Verbesserung der Oberflächengleitfähigkeit von Polyolefinen oder Polyacrylaten der Zusatz von Polyether modifizierten Siloxanen mit endständigen langkettigen aliphatischen Kohlenwasserstoffresten beschrieben.

Die EP-A-1 403 349 beschreibt die Verwendung von mit Oxyalkylenethergruppen modifizierten Epoxypolysiloxanen, die mindestens eine Oxyalkylenkette enthalten zum Fördern der Verlauf- und Netzeigenschaften von noch flüssigen kationisch strahlenhärtenden Beschichtungen, Druckfarben und Drucklacken.

In der EP-A-1 382 633 wird die Verwendung orgnofunktionell modifizierter, Phenylderivate enthaltender Polysiloxane als Dispergiermittel zur Herstellung von wässrigen Pigmentformulierungen, Lacken, Überzügen und Beschichtungen beschrieben.

Gegenstand der US-A-3 541 031 ist die Verwendung orgnofunktionell modifizierter, Urethangruppen enthaltender Polysiloxane als oberflächenaktive Mittel für Polyurethanschaumstoffe.

Diese Additive haben jedoch oft den Nachteil, entweder die Festkörpereigenschaften der Polymerphase wie Elastizität, Festigkeit und Formbeständigkeit oder die gegebenenfalls nach der Filmbildung oder Formgebung erforderlichen weiteren Arbeitsschritte nachteilig zu beinflussen. Die Auftragung von kratzbeständigen Filmen auf vorgefertigte Kunststoffteile ist dagegen mit einem zusätzlichen Arbeitschritt verbunden, der neben erhöhter Fertigungskosten auch das Ausschussrisiko erhöht.

Negativ ist auch der Effekt, dass es bei Überschreitung der Löslichkeitsgrenze des Additives im Polymer zu Ausblüherscheinungen (blooming) kommt. Dies zeigt sich in der Bildung von Oberflächenbelägen. Probleme beim Beschichten (verringerte Hafteigenschaften), Bedrucken oder Lackieren können die Konsequenzen sein.

Eine Aufgabe der vorliegenden Erfindung war es Additive zu entwickeln, die bei der Einarbeitung in thermoplastische Elastomere zu einer permanenten Verbesserung der Oberflächeneigenschaften führen, ohne dass durch Ausblühvorgänge negative Folgen bei nachgeschalteten Arbeitsschritten zu erwarten sind und die Verwendung und Einarbeitung dieser Verbindungen als Prozessadditive bei der Herstellung von Polymerformulierungen.

Diese Aufgabe wird gelöst durch Verwendung organomodifizierter Organosiloxanverbindungen.

Ein Gegenstand der Erfindung ist daher die Verwendung von organomodifizierten Polysiloxanen der allgemeinen Formel (I)

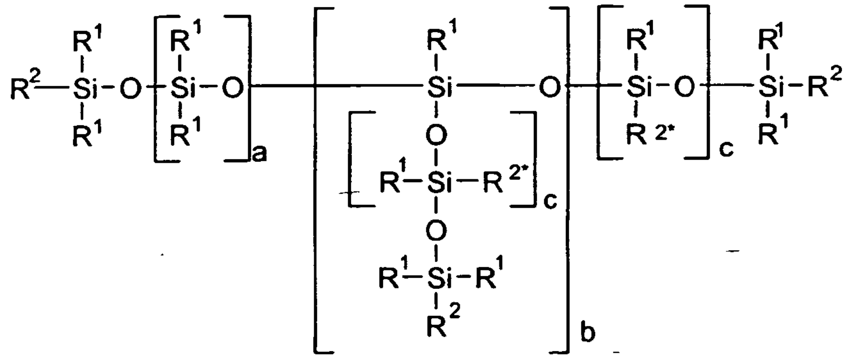

worin

| | |
|---|---|
| $R^1$ | unabhängig voneinander aliphatische oder aromatische $C_{1-20}$-Kohlenwaserstoffreste, |
| $R^2$, $R^{2*}$ | gleich oder verschieden - $[(OAlk)_d]_e$ - $(O)_k$-$R^3$ mit |
| $R^3$ | H, gegebenenfalls verzweigter $C_{1-20}$-Alkylrest, - $(CH_2\text{-}CHR^4)_h$ - $(O)_k$ -$Ph(R^5)_f$, |
| $R^4$ | H, $CH_3$, |
| $R^5$ | gegebenenfalls verzweigter $C_{1-20}$-Alkylrest, -$CH_2$-$CHR^4$- $(O)_m$-Ph $(R^5)_g$, |
| Alk | $C_{1-4}$-alkylrest |
| Ph | Phenylrest, |
| a | 0 bis 500, vorzugsweise < 100, insbesondere 5 bis 50, |
| b | 0 bis 50, vorzugsweise < 20, insbesondere < 10, |
| c | 0 bis 50, vorzugsweise 0 bis 10, insbesondere 0, |
| d | 0 bis 30, |
| e | 0 oder 1, |
| f | 0 bis 4, |
| g | 0 bis 4, |
| h | 0 oder 1, |
| k,m | 0 oder 1 sind, |

mit der Maßgabe, dass an > = 5 % der Si-Atome der organomodifizierten Siloxane der allgemeinen Formel I, ein Rest $R^3$ der allgemeinen Formel -$(CH_2\text{-}CHR^4)_h$-$(O)_k$-$Ph(R^5)_f$ gebunden ist als Additive zur Verbesserung der Oberflächenvergütung, Kratzbeständigkeit und des Abriebwiderstandes in thermoplastischen Elastomeren.

Es ist dem Fachmann geläufig, dass die Verbindungen in Form eines Gemisches mit blockweiser Verteilung oder einer im wesentlichen durch statistische Gesetze geregelten Verteilung vorliegen können, worin die Werte für die Indices Mittelwerte darstellen.

In den erfindungsgemäß bevorzugten organomodifizierten Polysiloxanen sind mindestens 90 % der Reste $R^1$ Methylreste.

Weitere bevorzugte organomodifizierte Polysiloxane sind dadurch gekennzeichnet, dass der Rest -$[(AlkO)_d]_e$-$R^3$ die Bedeutung -$(EO)_i$-(PO)P-(SO)q-$R^3$ mit EO = $C_2H_4O$, PO = i-$C_3H_6O$,

$$SO = -O-CH_2-CH-Ph(R^5)_f,$$

i = 0 bis 10, vorzugsweise < 5, p = 0 bis 10, vorzugsweise 2 bis 5, q = 0 bis 10, vorzugsweise 2 bis 5 und i + p + q = d mit der Maßgabe, dass bei e = 1 und i + p + q > 0, c = 0 und bei e = 0, c > 0 ist. Die Einheiten -$(E0)_i$-$(PO)_p$-$(SO)_q$- können sowohl blockweise als auch statistisch verteilt im Molekül vorliegen.

Ganz besonders bevorzugt sind organomodifizierte Polysiloxane in denen mindestens 90 % der Reste $R^1$ Methylreste sind und i und p = 0, q = 1 bis 5 und $R^1$ = H oder -$CH_3$ und $R^3$ = H ist.

Ein weiterer Gegenstand der Erfindung ist die Verwendung der Verbindungen gemäß der allgemeinen Formel (I) als Prozessadditive bei der Herstellung von Polymerformulierungen.

Erfindungsgemäße Beispiele:

Strukturen:

Typische Einsatzkonzentrationen bei denen Vorteile der erfindungsgemäßen Verbindungen offensichtlich werden sind im Bereich von 0,3 bis 5 Gew.-%, vorzugsweise im Bereich von 0,5 bis 2,0 Gew.-%, bezogen auf das thermoplastische Polymer.

Die Herstellung der Compounds, die erfindungsgemäße organomodifizierte Siloxane enthalten, erfolgt dem Fachmann geläufig in einem zweistufigem Verfahren.

Dabei wird das Polymer mit dem organomodifizierten Siloxan und möglichen anderen Inhaltstoffen, wie z.B. Pigmente, Füllstoffe und andere Additive, wie z.B. Antioxidantien oder Antistatik-Additive vorgemischt. Zur Vormischung dienen Mischaggregate wie z.b. Henschel- oder Taumelmischer.

Erfindungsgemäße Verbindungen werden anschließend unter der Einwirkung von Scherkräften, z.B. Einarbeitung auf einem Extruder in das Polymer eingebettet. Alternativ ist die Einarbeitung auch in einem Kneter oder unter Aufschmelzen in einem Reaktor denkbar.

Termoplastische Elastomere für die erfindungsgemäße Verbindungen einsetzbar sind:

Werkstoffe, bei denen elastische Polymerketten in thermoplastisches Material eingebunden sind. Sie lassen sich in einem rein physikalischen Prozess in Kombination von hohen Scherkräften, Wärmeeinwirkung und anschließender Abkühlung verarbeiten. Thermoplastische Elastomere sind generell flexible Produkte mit niedrigem Elastizitätsmodul die bei Raumtemperatur wiederholt auf mindestens das Doppelte ihrer ursprünglichen Länge gedehnt werden können und nach Beendigung der Zugspannung wieder nahe an ihre ursprüngliche Länge zurückkehren. Sie werden vielfach zur Modifizierung der Eigenschaften von starren Duroplasten verwendet, meist zur Steigerung der Stoßfestigkeit. Erneute Wärme- und Scherkrafteinwirkung führt wieder zur Aufschmelzung und Verformung des Materials.

Prinzipiell kann man TPE-Typen in zwei generischen Klassen zusammenfassen, nämlich Blockcopolymere (Styrole, Copolyester, Polyurethane und Polyamide) und thermoplastische/Elastomer-Mischungen und -Legierungen (thermoplastische Polyolefine und thermoplastische Vulkanisate). Diese herkömmlichen TPE-Typen sind als Zwei-Phasen-Systeme bekannt. Im wesentlichen wird eine harte thermoplastische Phase mechanisch oder chemisch mit einer weichen Elastomer-Phase gekoppelt. Daraus entsteht ein TPE, das die kombinierten Eigenschaften beider Phasen besitzt. Herkömmliche TPE-Klassen sind Styrenole (S-TPE) Copolyester (COPE) Polyurethane (TPU) Polyamide (PEBA) Polyolefinmischungen (TPO) Polyolefinlegierungen (TPV) .

Die erfindungsgemäß mitverwendeten Verbindungen werden im geschmolzenen Zustand unter Rühren im Reaktor oder mittels Extruder in das Polymer eingebracht.

Ausführungsbeispiele:

Herstellung der Compounds:

Vor der Extrusion wurde eine homogene Mischung der Additive mit dem Polymer hergestellt. Die Wahl der Mischmethode war abhängig von der Konfektionsart und des Aggregatzustandes des Additivs.

Die Vormischung der festen Additive (Pellet- oder Pulverform) wurde manuell durchgeführt. Hierbei wurde das Additiv in das Polymer von Hand 5 min eingerührt. Flüssige Additive wurden in einem Taumelmischer des Typs RR Mini auf das Polymergranulat mit 100 U/min aufgezogen und danach mit der Dosierwaage dem Extruder zugegeben.

Die Vormischungen (1,5 kg) werden in einem Taumelmischer (Fabrikat Engelmann, Typ Mini 80) hergestellt. Dazu wird die entsprechende Menge Additiv (1 bis 10 pph) mit dem Trägerpolymer abgemischt. Mischungen von Polymergranulat und Additiven in Pulver-, Granulat- und Pelletform sind für die Dosiereinrichtungen problemlos. Mischungen mit Flüssigadditiven sind homogen und dosierbar wenn die Konzentration 1 % nicht übersteigt.

Extrusion am Doppelschneckenextruder

Die Additive wurden mit einem gleichläufigen Doppelschneckenextruder Modell Micro 27 der Fa. Leistritz homogen in das Polymer eingemischt. Der Extruder ist aus insgesamt neun einzelnen Zylinderzonen und einer Einzugszone aufgebaut. Alle Zylindersegmente werden mit vier Zugankern zusammengehalten. Die Temperatur der neun Zylinderzonen und der Einzugszone lassen sich unabhängig voneinander regeln. Die Heizungen werden über Temperaturregler gesteuert. Durch Thermofühler (Art: Fe-CuNi/je Heizpatrone 1 Stück) werden die Istwerte erfasst und mit den eingestellten Sollwerten verglichen. Daraufhin wird die Temperaturabweichung durch Heizen bzw. Kühlen minimiert. Die Temperaturabweichungen sind sehr gering (maximal 2 bis 3 °C). Die Einzugszone wird mit Leitungswasser gekühlt. Die Düse des Extruders ist beheizbar. Der Extruder ist mit einer Zylinderentgasungszone (Atmosphärisch und Vakuum) ausgestattet. Dies ist bei einem Doppelschneckenextruder wichtig, damit der Extruder nicht mit einem sehr niedrigen Durchsatz

"gefahren" werden muß, um ein zu frühes Plastifiziern des Granulats und somit Lufteinschlüsse zu verhindern.

Die Dosierung des Granulats mit aufgetrommeltem Additiv erfolgt mit einer Dosier-Differentialwaage vom Typ DDW-H2O der Fa. Brabender. Diese Waage eignet sich sowohl für die kontinuierliche, gravimetrische Dosierung als auch für schlecht rieselfähige pulvrige bis faserige Schüttgüter. Bei allen Versuchen, in denen mit Hilfe der Dosierwaage das Granulat mit aufgetrommeltem Additiv zudosiert wurde, kam ein Einzelschneckenmodul mit Trogrührwerk zum Einsatz.

Die zugegebene Wirkstoffkonzentration lag bei 1 phr (1 phr ≡ 0,99 %). Die Drehzahl des Extruders wurde bei jedem Compound auf 200 rpm eingestellt und durch die variable Zugabe der Dosierwaage wurde der Durchsatz bei 6 kg/h gehalten.

Verarbeitung der Compounds an der Spritzgussmaschine

Nach der Extrusion wurden die Compounds vor dem Formgebungsprozess getrocknet. Es befand sich noch 1 bis 2 % Wasser aus dem Kühlbad am Polymergranulat. Um dies zu entfernen wurde das Granulat vor dem Spritzgießen 4 h bei 60 °C in einem Trockenschrank bei Umluft getrocknet. Es wurden Doppelplatten für die Kratzfestigkeitsmessung hergestellt. Die Probenkörper wurden an einer Spritzgussmaschine der Firma ENGEL hergestellt. Durch eine Schnecke gelangt das geschmolzene Polymer vor die Schneckenspitze. Eine axiale Bewegung der Schnecke bewirkt die Vorverdichtung des plastifizierten Polymers. Unter Druck wird diese Masse durch eine Düse in ein geschlossenes Werkzeug eingespritzt. Nach dem Abkühlen verlässt das gespritzte Formteil das Werkzeug. Die ersten fünf Probenkörper wurden jeweils aussortiert.

Anwendungstechnische Überprüfung :

(1) Bestimmung des Schmelzindex MFI

Die Schmelzflussmessung wurde an dem Gerät der Meltfixer der Firma SWG Polymertechnik durchgeführt. Zur Probenvorbereitung wurde das Polymergranulat vor der Messung 2 h bei 60 °C getrocknet. Bei der Prüfung des Compounds wurde die vorgegebene Probemasse (3 bis 8 g) in den auf Prüftemperatur vorgeheizten Zylinder eingefüllt, verdichtet und vorgewärmt (5 bis 15 min). Danach wurde mit dem für die jeweilige Prüfung vorgeschriebenem Gewicht der Kolben belastet. Von dem austretendem Strang wurden in konstant gehaltenen Zeitabständen (5 bis 240 s, je nach Fließfähigkeit) Abschnitte gleicher Länge im Bereich von 10 bis 20 mm abgetrennt. Nach der Abkühlung sind die Extrusionsabschnitte auf 0,001 g genau gewogen worden. Der Schmelzindex wurde wie folgt berechnet:

$$MFI = \frac{m \cdot 600}{t}$$

m Masse der Extrudatabschnitte;
t in s Auslaufzeit der Extrudatabschnitte;
600 Faktor für Bezugszeit von 10 min.

In diesem Projekt wurden die TPE Compounds nach DIN 16772 mit einem Temperatur-Auflagemasseverhältnis von 220/10 bestimmt.

(2) Messung der Gleitreibung (COF):

Die Erfassung der Gleitreibung erfolgt in Anlehnung an DIN 53 375, ISO 8295 - Bestimmung des Reibungsverhaltens-.

Die Messung erfolgt an einer Spritzplatte (90 x 180 mm, Dicke 3 mm). Es werden je 10 Platten gespritzt und die COF-Wertebestimmungen durchgeführt.

- Gleitzylinder 520 g, Querschnitt 12,6 $mm^2$, Gleitmedium Filz,
- Messstrecke 200 mm,
- Geschwindigkeit 6 mm/s.

Die Gleitreibung wurde unmittelbar nach Herstellung an der spritzfrischen Platte und nach Aufbewahrung (7 Tage bei 20 °C) gemessen.
(3) Kratzfestigkeitsmessung:
Bestimmt wurde die Kratzfestigkeit mit dem UNIVERSAL SCRATCH TESTER Modell 413 der Firma Erichsen.
Die Kratzfestigkeit ist definiert als die kleinste Kraft, ausgeübt durch eine Diamantspitze mit vorgegebener Form, welche eine fortlaufende Oberflächenmarkierung hinterlässt. Diese Oberflächenmarkierung muss mit normaler, falls notwendig korrigierter Sehkraft sichtbar sein.
Diese Kraft wird festgelegt, indem schrittweise reduzierte Kräfte auf die Diamantspitze ausgeübt werden und die entstandenen Markierungen untersucht werden. Die Messung wurde in Anlehnung an die ISO 4586-2:1997 Norm und die DIN 53799 durchgeführt. Die Doppelplatten zur Kratzfestigkeitsmessung wurden 24 h bei 23 °C gelagert und anschließend geprüft. Es wurden 4 bis 6 Kratzer mit verschiedenen Auflagekräften bei 3 unterschiedlichen Platten angebracht. Die gemessenen Platten hatten eine Abmessung von 60 x 60 mm. Die Auswertung der Kratzer erfolgte visuell im Auflicht.

Anwendungsbeispiele:

Eingesetzte Materialien:

Thermoplastische Polyester Copolmyerisat Elastomer der Fa. DuPont das unter dem Name Hytrel® 455 vermarktet wird.
Als Additive wurden folgende Organomodifizierte Verbindungen in Mengen von 1 pph (parts per hundreds) eingesetzt:

Ausführungsbeispiele:

Reaktionsführung:

Umsetzungen von Wasserstoffsiloxanen in einer dehydrogenativen Hydrosilylierung (Beispiel 1, 2) oder Hydrosilylierung (Beispiel 3 bis 6) :
Alle Reaktionen wurden unter Inertgas ausgeführt. Entstand bei der Reaktion Wasserstoff, wurde dieser über einen Blasenzähler abgeleitet.

Aufarbeitung:

Falls nicht anders beschrieben, wählte man folgende Standardaufarbeitung:
Die Reaktionsmischung wurde durch Zugabe eines Amins zur Filtration vorbereitet. Anschließend filtrierte man über Tiefenfilter gegebenenfalls mit leichtem Überdruck. Zur Filtration wurde eine Tiefenfilter-Schicht zur Fest/Flüssigtrennung im Bereich der Feinklär- oder Grobfiltration verwendet.

Analysen:

Der Umsatz wurde durch die Bestimmung der Rest SiH-Funktionen mittels einer gasvolumetrischen Wasserstoffbestimmung [Umsatzangabe in %; SiH-Wert in val/kg Prüfsubstanz] ermittelt. Die Struktur der Verbindungen wurden anhand von NMR-Spektroskopie überprüft (29Si, -1H, -13C) .

Beispiel 1:

Umgesetzt wurden 104,4 g $Me_2HSiO\ (SiMe_2O)_{15}SiMe_2H$ (SiH-Wert 1,82 val/kg) mit 400 g eines mit Phenolpolyether [$(RC_6H_4O)\ (CHCH_3\text{-}CH_2)x\text{-}OH$] gestarteten, rein PO-haltigen Polyethers (mittlere Molmasse von 1.900 g/mol). Der Polyether wurde mit 10 Massen-% Überschuss eingesetzt. Bei 90 °C wurden 0,51 g Tris(perfluorphenyl)boran, entsprechend 0,5 mol-% bezogen auf den SiH-Wert, zugegeben. Die Reaktionstemperatur stieg kurzzeitig auf 102 °C an. Nach 25 min lag der Umsatz, entsprechend der SiH-Wert-Methode bei 100 %. Vor der Filtration über das Tiefenfilter gab man je 1 g N-Methylmorpholin zu.

Beispiel 2:

Umsetzung von $Me_2HSiO(SiMe_2O)_{30}SiMe_2H$ (SiH-Wert 0,92 val/kg) mit Phenylpolyether unter Verwendung

von Tris (Perfluortriphenylboran) :

Umgesetzt wurden 408 g eines mit Phosphazen equilibrierten, unneutralisierten $Me_2HSiO$ $(SiMe_2O)_{30}SiMe_2H$ (SiH-Wert 0,90 val/kg) mit 92 g Phenylpolyether. Es wurden 0,59 g Tris (Perfluortriphenylboran) vorgelegt und das Siloxan über einen Zeitraum von 2 h zugetropft.

Nach vollständigem Umsatz (Si-H Wert = 0) wurden alle flüchtigen Bestandteile im Vakuum bei 100 °C entfernt. Man erhielt nach einer anschließenden Filtration eine klares Produkt.

Beispiel 3:

Umsetzung von $Me_3SiO(SiMe_{20})_{45}$ $(SiHMeO)_{10}SiMe_3$ mit Styrol:

Es wurden Styrol in 200 ml Toluol auf 100 °C erhitzt. Nach Zugabe von 10 ppm $H_2PtCl_6$ wurde das seitenständig Si-H-funktionalisierte Wasserstoffsiloxan (SiH-Wert 1,37 val/kg) zugegeben. Anschließend wurde ca. 2 Stunden bei der Temperatur gerührt bis der Umsatz nach Si-H-Verbrauch > 95 % betrug. Das Lösemittel wurde abdestilliert und das Produkt wurde nach Abkühlen auf Raumtemperatur filtriert.

Beispiel 4:

Umsetzung von $Me_3SiO(SiHMeO)_{100}SiMe_3$ mit-Styrol und 1-Hexadecen:

Es wurden Styrol und 1-Hexadecen in 200 ml Toluol auf 100 °C erhitzt. Nach Zugabe von 10 ppm $H_2PtCl_6$ das seitenständig Si-H-funktionalisierte Wasserstoff-siloxans (SiH-Wert 16,17 val/kg) zugegeben. Anschließend wurde ca. 2 Stunden bei der Temperatur gerührt bis der Umsatz nach Si-H-Verbrauch > 95 % betrug. Das Lösemittel wurde abdestilliert und das Produkt wurde nach Abkühlen auf Raumtemperatur filtriert.

Beispiel 5:

Umsetzung von $Me_3SiO(SiMe_{20})_{20}(SiHMeO)_{10}SiMe_3$ mit Styrol:

Es wurden Styrol in 200 ml Toluol auf 100 °C erhitzt. Nach Zugabe von 10 ppm $H_2PtCl_6$ wurden das seitenständig Si-H-funktionalisierte Wasserstoffsiloxan (SiH-Wert 4,45 val/kg) zugegeben. Anschließend wurde ca. 2 Stunden bei der Temperatur gerührt bis der Umsatz nach Si-H-Verbrauch > 95 % betrug. Das Lösemittel wurde abdestilliert und das Produkt wurde nach Abkühlen auf Raumtemperatur filtriert.

Beispiel 6:

Nicht erfindungsgemäß:

Umsetzung von $Me_3SiO(SiMe_{20})_{20}(SiHMeo)_{10}SiMe_3$ mit 1-Hexadecen:

Es wurden 1-Hexadecen in 200 ml Toluol auf 100 °C erhitzt. Nach Zugabe von 10 ppm $H_2PtCl_6$ wurde das seitenständig Si-H-funktionalisierte Wasserstoffsiloxan (SiH-Wert 4,45 val/kg) zugegeben. Anschließend wurde ca. 2 Stunden bei der Temperatur gerührt bis der Umsatz nach Si-H-Verbrauch > 95 % betrug. Das Lösemittel wurde abdestilliert und das Produkt wurde nach Abkühlen auf Raumtemperatur filtriert.

Beispiel 7:

Nicht erfindungsgemäß:

Umgesetzt wurden 104,4 g $Me_2HSiO(SiMe_2O)_{30}SiMe_2H$ (SiH-Wert 0,91 val/kg) mit 400 g eines mit Polyether [RO $(CHCH_3-CH_2)$ X-OH] gestarteten, rein PO-haltigen Polyethers (mittlere Molmasse von 1.500 g/Mol). Der Polyether wurde mit 10 Massen-% Überschuss eingesetzt. Bei 90 °C wurden 0,51 g Tris(Perfluortriphenylboran), entsprechend 0,5 Mol-% bezogen auf den SiH-Wert, zugegeben. Die Reaktionstemperatur stieg kurzzeitig auf 102 °C an. Nach 25 min lag der Umsatz, entsprechend der SiH-Wert-Methode bei 100 %. Vor der Filtration über das Tiefenfilter gab man je 1 g N-Methylmorpholin zu.

| | Verbindung der allgemeinen Formel (I) mit |
|---|---|
| Verbindung 1 | a = ca. 15, b, c = 0, $R^1 = CH_3$, $R^2$ mit Alk = $-CH_2-CH(CH_3)-$, d = 4, e = 1, $R^3 = -O-Ph-C_9H_{19}$ |

(fortgesetzt)

| | Verbindung der allgemeinen Formel (I) mit |
|---|---|
| Verbindung 2 | wie Verbindung 1 aber a = ca. 30 |
| Verbindung 3 | a = ca. 45, b = 0, C = 10, $R^1 = CH_3$, $R^2$ mit e = 0 und $R^3 = -CH_2-CH_2-Ph$ |
| Verbindung 4 | a, b = 0, C = 100, $R^1 = CH_3$, $R^2$ mit e = 0 und $R^3 - CH_3$, $R^{2*}$ mit e = 0 und $R^3 = C_{16}H_{33}$ : $-CH_2-CH\ (CH_3)\ -Ph$ = 1 : 1 |
| Verbindung 5 | wie Verbindung 3 aber a = 20, b = 0, c = 10 |
| Verbindung 6 (Vergleich) | wie Verbindung 4 aber $R^{2*}$ mit e = 0, $R^3 = C_{16}H_{33}$ |
| Verbindung 7 (Vergleich) | a = 30, b, c = 0, $R^2$ mit d = 10, e = 1, $R^3$ = H |

Versuchsergebnisse:

Während der Extrusion wurde die prozentuale Änderung der Stromaufnahme als Ampere [A-%] des Extruders und der Druckaufbau in der Schnecke [bar] gemessen. Ein Anstieg der Stromaufnahme ist ein Kennzeichen für die erhöhte Antriebsleistung, um die Soll-Drehzahl der Schnecke einzuhalten. Die Stromaufnahme ist bezogen auf den Null-Wert, bei dem der Extruder leer, d.h. ohne Polymermaterial, läuft. Eine Erniedrigung der Stromaufnahme und des Druckaufbaus gegenüber den Standardwerten führt zu einer günstigeren, da schonenderen Verarbeitung, bzw. erlaubt eine Erhöhung des Durchsatzes. In der Industrie werden deshalb innere und äußere Gleit- und Schmiermittel angewendet.

Belag:

Nach einem Lagertest von 28 Tagen bei 120 °C wurde visuell festgestellt, ob sich an der Oberfläche der gespritzen Platte ein Belag, durch Migration eines Additives gebildet hat.

| Compound 1 | erfindungsgemäß | Strom [%] | Druck [bar] | Belag |
|---|---|---|---|---|
| Standard | nein | 50 | 21 | Nein |
| Verbindung 1 | Ja | 35 | 20 | Nein |
| Verbindung 2 | Ja | 34 | 19 | Nein |
| Verbindung 3 | Ja | 35 | 20 | Nein |
| Verbindung 4 | Ja | 34 | 20 | Nein |
| Verbindung 5 | Ja | 36 | 21 | Nein |
| Verbindung 6 | nein | 43 | 20 | leicht |
| Verbindung 7 | nein | 40 | 21 | leicht |

| | MFI | COF [1 Tag] | COF [7 Tag] | Kratztest* |
|---|---|---|---|---|
| Standard | 32 | 0,7 | 0,6 | 5 |
| Verbindung 1 | 35 | 0,1 | 0,1 | 1-2 |
| Verbindung 2 | 35 | 0,2 | 0,2 | 2 |
| Verbindung 3 | 29 | 0,2 | 0,2 | 1-2 |
| Verbindung 4 | 33 | 0,1 | 0,2 | 2 |
| Verbindung 5 | 31 | 0,2 | 0,2 | 1-2 |
| Verbindung 6 | 32 | 0,3 | 0,3 | 4 |

(fortgesetzt)

| | MFI | COF [1 Tag] | COF [7 Tag] | Kratztest* |
|---|---|---|---|---|
| Verbindung 7 | 33 | 0,3 | 0,4 | 4 |
| * 5 = Kratzer ist sehr tief, gut optisch wahrnehmbar, 1 = Oberfläche ist kaum bis gering beschädigt; Kratzer ist optisch kaum wahrnehmbar. | | | | |

## Patentansprüche

**1.** Verwendung von organomodifizierten Polysiloxanen der allgemeinen Formel (I)

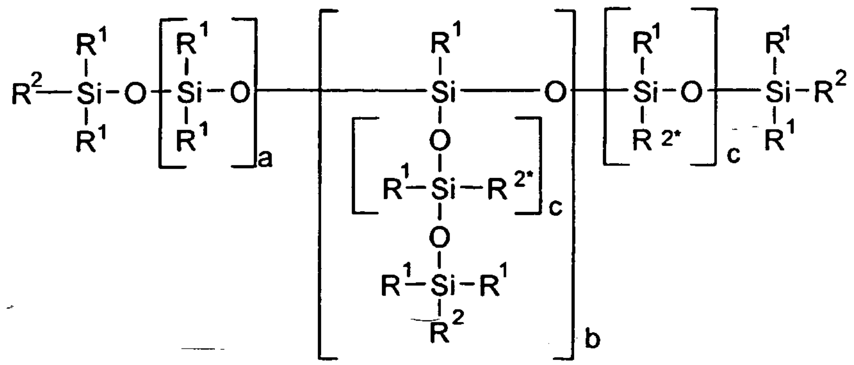

worin

$R^1$ unabhängig voneinander aliphatische oder aromatische $C_{1-20}$-Kohlenwaserstoffreste,
$R^2$,$R^{2*}$ gleich oder verschieden $-[(OAlk)_d]_e-(O)_k-R^3$ mit
$R^3$ H, gegebenenfalls verzweigter $C_{1-20}$-Alkylrest, $-(CH_2-CHR^4)h-(O)_k-Ph(R^5)_f$,
$R^4$ H, $CH_3$,
$R^5$ gegebenenfalls verzweigter $C_{1-20}$-Alkylrest, $-CH_2-CHR^4-(O)_m-Ph(R^5)_g$,
Alk $C_{1-4}$-Alkylrest,
Ph Phenylrest,
a 0 bis 500,
b 0 bis 50,
c 0 bis 50,
d 0 bis 30,
e 0 oder 1,
f 0 bis 4,
g 0 bis 4
h 0 oder 1
k,m 0 oder 1 sind,

mit der Maßgabe, dass an > = 5 % der Si-Atome der organomodifizierten Siloxane der allgemeinen Formel I, ein Rest $R^3$ der allgemeinen Formel $-(CH_2)_2-CHR^4)_h-(O)_k-Ph(R^5)_f$ gebunden ist als Additive zur Verbesserung der Oberflächenvergütung, Kratzbeständigkeit und des Abriebwiderstandes in thermoplastischen Elastomeren.

**2.** Verwendung von organomodifizierten Polysiloxanen gemäß Anspruch 1, **dadurch gekennzeichnet, dass** mindestens 90 % der Reste $R^1$ Methylreste sind.

**3.** Verwendung von organomodifizierten Polysiloxanen gemäß den Ansprüchen 1 bis 2, **dadurch gekennzeichnet, dass** der Rest $-[(AlkO)_d]_e-R^3$ die Bedeutung $-(EO)_i-(PO)_p-(SO)_q-R^3$ mit EO = $C_2H_4O$, PO = $i-C_3H_6O$,

$$SO = -O-CH_2-CH(-)-Ph(R^5)_f,$$

i = 0 bis 10, vorzugsweise < 5, p = 0 bis 1.0, vorzugsweise 2 bis 5, q = 0 bis 10, vorzugsweise 2 bis 5 und i + p + q = d mit der Maßgabe, dass bei e = 1 und i + p + q > 0, c = 0 und bei e = 0, c > 0 ist.

4. Verwendung von organomodifizierten Polysiloxanen gemäß Anspruch 3, **dadurch gekennzeichnet, dass** i und p = 0, q = 1 bis 5 und $R^1$ = H oder $-CH_3$ und $R^3$ = H ist.

5. Verwendung der Verbindungen gemäß der allgemeinen Formel (I) als Prozessadditive bei der Herstellung von Polymerformulierungen.

## Claims

1. Use of organomodified polysiloxanes of the general formula (I)

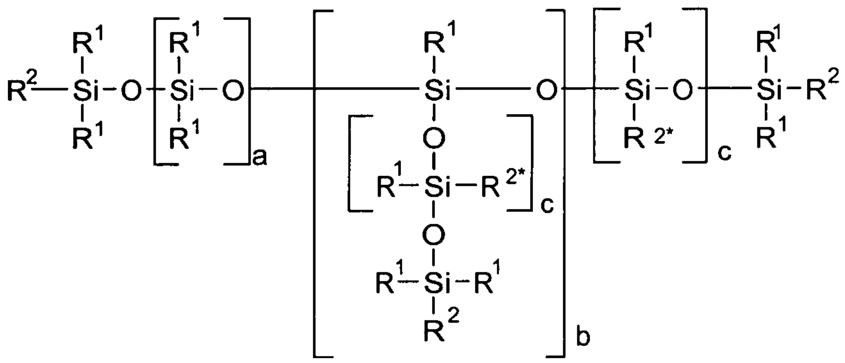

in which

$R^1$ independently at each occurrence is an aliphatic or aromatic $C_{1-20}$ hydrocarbon radical,
$R^2$ and $R^{2*}$ are identical or different and are $-[(OAlk)_d]_e-(O)_k-R^3$, where
$R^3$ is H, a linear or branched $C_{1-20}$ alkyl radical or $-(CH_2CHR^4)_h-(O)_k-Ph(R^5)_f$,
$R^4$ is H or $CH_3$,
$R^5$ is a linear or branched $C_{1-20}$ alkyl radical or $-CH_2-CHR^4-(O)_m-Ph(R^5)_g$,
Alk is a $C_{1-4}$ alkyl radical,
Ph is a phenyl radical,
a is from 0 to 500,
b is from 0 to 50,
c is from 0 to 50,
d is from 0 to 30,
e is 0 or 1,
f is from 0 to 4,
g is from 0 to 4,
h is 0 or 1, and
k and m are 0 or 1,

with the proviso that a radical $R^3$ of the general formula $-(CH_2)_2-CHR^4)_h-(O)_k-Ph(R^5)_f$ is attached to > 5% of the Si atoms of the organomodified siloxanes of the general formula I,
as additive for improving the surface quality, scratch resistance and abrasion resistance in thermoplastic elastomers.

2. Use of organomodified polysiloxanes according to Claim 1, **characterized in that** at least 90% of the radicals $R^1$ are methyl radicals.

3. Use of organomodified polysiloxanes according to Claim 1 or 2, **characterized in that** the radical - $[(AlkO)_d]_e$- $R^3$ has the definition $(EO)_l$-$(PO)_p$-$(SO)_q$-$R^3$, where EO = $C_2H_4O$, PO = i-$C_3H_6O$,

$$SO = -O-CH_2-CH-Ph(R^5)_f,$$

i = 0 to 10, preferably < 5, p = 0 to 10, preferably from 2 to 5, q = 0 to 10, preferably from 2 to 5, and i + p + q = d, with the proviso that, when e = 1 and i + p + q are > 0, c = 0 and, when e = 0, c is > 0.

4. Use of organomodified polysiloxanes according to Claim 3, **characterized in that** i and p = 0, q = 1 to 5 and $R^1$ = H or -$CH_3$ and $R^3$ = H.

5. Use of compounds of the general formula (I) as process additives in the preparation of polymer formulations.

**Revendications**

1. Utilisation de polysiloxanes organomodifiés de la formule générale (I)

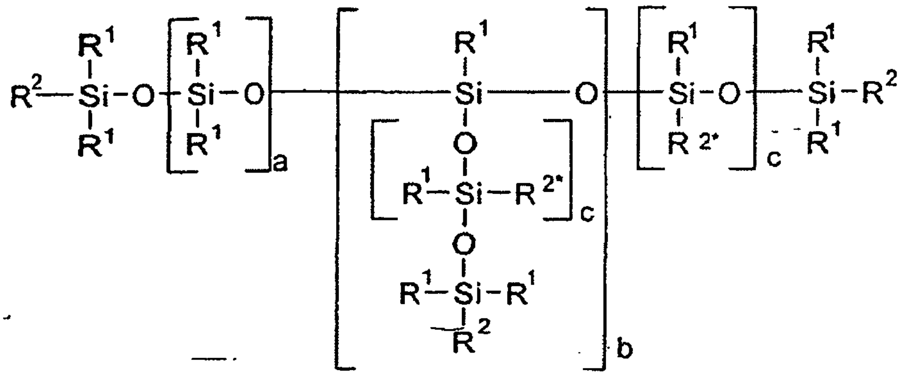

dans laquelle

$R^1$ représentent indépendamment les uns des autres des radicaux hydrocarbonés aliphatiques ou aromatiques en $C_1$ à $C_{20}$,
$R_2$, $R^{2+}$ sont identiques ou différents et représentent des radicaux - $[(OAlk)_d]_e$- $(O)_k$-$R^3$ où
$R^3$ représente H, un radical alkyle en $C_1$ à $C_{20}$ le cas échéant ramifié, - $(CH_2CHR^4)_h$- $(O)_k$-Ph $(R^5)_f$,
$R^4$ représente H, $CH_3$,
$R^5$ représente un radical alkyle en $C_1$ à $C_{20}$ le cas échéant ramifié, -$CH_2$-$CHR^4$- $(O)_m$-Ph$(R^5)_g$,
Alk est un radical alkyle en $C_1$ à $C_4$,
Ph est un radical phényle,
a vaut de 0 à 500,
b vaut de 0 à 50,
c vaut de 0 à 50,
d vaut de 0 à 30,
e vaut 0 ou 1,
f vaut de 0 à 4,
g vaut de 0 à 4,
h vaut 0 ou 1,
k,m valent 0 ou 1

à la condition qu'à 5% ou plus des atomes de Si du siloxane organomodifié de la formule générale I soit lié un radical $R^3$ de la formule générale $(CH_2)_2$-$CHR_4)_h$-$(O)_k$-$Ph(R^5)_f$ en tant qu'additifs pour améliorer le traitement de surface, la résistance aux griffes et la résistance à l'abrasion dans des élastomères thermoplastiques.

**2.** Utilisation de polysiloxanes organomodifiés suivant la revendication 1, **caractérisée en ce qu'**au moins 90% des radicaux $R^1$ sont des radicaux méthyle.

**3.** Utilisation de polysiloxanes organomodifiés suivant les revendications 1 à 2, **caractérisée en ce que** le radical -$[(AlkO)_d]_e$-$R^3$ a la signification -$(EO)_i$-$(PO)_p$-$(SO)_q$-$R^3$ avec EO = $C_2H_4O$, PO = i-$C_3H_6O$, SO = -O-$CH_2$-CH-$Ph(R^5)_f$, i = 0 à 10, de préférence < 5, p = 0 à 10, de préférence 2 à 5, q = 0 à 10, de préférence 2 à 5 et i + p + q = d, à la condition que, pour e = 1 et i + p + q > 0, c = 0 et pour e = 0, c > 0 .

**4.** Utilisation de polysiloxanes organomodifiés suivant la revendication 3, **caractérisée en ce que** i et p = 0, q = 1 à 5 et $R^1$ = H ou -$CH_3$ et $R^3$= H.

**5.** Utilisation des composés de la formule générale (I) en tant qu'additifs de processus dans la formulation de polymères.